# EUROPÄISCHE PATENTANMELDUNG

(11) **EP 4 831 792 A1**
(43) Veröffentlichungstag der Anmeldung: **28.10.2026**
(21) Anmeldenummer: 25172001.7
(22) Anmeldetag: 23.04.2025
(51) Int. Cl.: G06F 8/33, G05B 19/042, G06N 20/00

(54) **VERFAHREN UND VORRICHTUNGEN ZUM ERSTELLEN EINER STEUERUNGSLOGIK MINDESTENS EINES BAUTEILS UNTER VERWENDUNG VON LARGE LANGUAGE MODELS**

(71) Anmelder: SICK AG, 79183 Waldkirch (DE)
(72) Erfinder: Jahner, Richard, 79183 Waldkirch (DE); Bruno, Daniel, 79183 Waldkirch (DE)
(74) Vertreter: Manitz Finsterwald Patent- und Rechtsanwaltspartnerschaft mbB

(57) **Zusammenfassung**

Ein Verfahren zum Erstellen einer Steuerungslogik mindestens eines Bauteils weist auf: Übermitteln von Bauteilbeschreibungsdaten an ein Large Language Model, wobei die Bauteilbeschreibungsdaten das mindestens eine Bauteil beschreiben; Übermitteln von Logikbeschreibungsinformationen an das Large Language Model, wobei die Logikbeschreibungsinformationen bezüglich der zu erstellenden Steuerungslogik aufweisen; und Instruieren des Large Language Models zum Erstellen der Steuerungslogik basierend auf den Bauteilbeschreibungsdaten und den Logikbeschreibungsinformationen.

## Beschreibung

Die Erfindung betrifft Verfahren und Vorrichtungen zum Erstellen einer Steuerungslogik mindestens eines Bauteils. Die Bauteile können einen oder mehrere Sensoren und/ oder einen oder mehrere Aktoren enthalten.

IO-(input/ output) Link ist eine standardisierte, herstellerunabhängige Kommunikationsschnittstelle für Sensoren und Aktoren in der Automatisierungstechnik. Es ermöglicht die bidirektionale Punkt-zu-Punkt-Kommunikation zwischen einem Steuerungssystem und einem Feldgerät, was eine einfache Parametrierung, Diagnose und effiziente Übertragung von Prozessdaten ermöglicht.

Ein IO-Link-Master ist das Bindeglied zwischen den IO-Link-Geräten (z. B. Sensoren oder Aktoren) und dem übergeordneten Automatisierungssystem (z. B. SPS oder IoT-Plattformen). Er koordiniert die Kommunikation, sammelt die Daten von den angeschlossenen IO-Link-Geräten und überträgt sie weiter, oft über einen Feldbus wie Profinet oder EtherNet/IP. Zudem spielt der IO-Link-Master eine wichtige Rolle in IoT-Anwendungen, da er Daten über Protokolle wie MQTT oder OPC UA an Cloud- oder IoT-Systeme weiterleiten kann. Der IO-Link-Master fungiert somit als Gateway sowohl zur klassischen Steuerungsebene als auch zur modernen IoT-Infrastruktur.

Ein Logikeditor ist eine Softwareanwendung oder ein Tool, das zur grafischen Erstellung und Bearbeitung von Steuerungslogik genutzt wird. Er ermöglicht es, logische Abläufe mithilfe von Symbolen und/ oder grafischen Bausteinen und/ oder logischen Verknüpfungen (z. B. AND, OR, Timer) zu definieren, ohne dass dafür eine textbasierte Programmierung erforderlich ist. Dadurch können auch komplexe Steuerungsaufgaben auf intuitive Weise erstellt und visualisiert werden, was die Entwicklung und das Testen von Automatisierungslösungen erleichtert. Logikeditoren werden häufig in der industriellen Automatisierung zur Konfiguration von Steuerungen und Geräten (in anderen Worten: Bauteilen) verwendet.

Gewöhnlich ist bei der Konfiguration von IO-Link Master Gateways vorgesehen, dass zur Erstellung von logischen Verknüpfungen und Steuerungsaufgaben entweder grafische Logikeditoren oder direkt in speicherprogrammierbaren Steuerungen (SPS) programmierte Logiken verwendet werden. Diese Methoden erfordern spezielle technische Kenntnisse, insbesondere bei der Nutzung von SPS, wo das Schreiben und Testen von Programmcode notwendig ist. Logikeditoren, die in industriellen Automatisierungsumgebungen genutzt werden, bieten zwar eine visuelle Oberfläche, jedoch bleibt die Komplexität der Logikdefinition bestehen. Zwar ist die Einstiegshürde bei einem Logikeditor nicht besonders hoch, allerdings müssen Anwender Kenntnisse zu Zahlenformaten und Logikverknüpfungen haben und in der Lage sein, die Zielapplikation in kleine Logikoperationen zu zerlegen, was nicht immer einfach ist. Darüber hinaus erfolgt die Interaktion überwiegend über benutzerdefinierte Oberflächen, welche keine natürliche Sprachverarbeitung unterstützen und somit nicht intuitiv bedienbar sind. Dies führt zu einer zeitaufwendigen Erstellung und Anpassung von Steuerungslogiken.

Logikeditoren können beispielsweise beim SIG200 oder SIG300 zum Einsatz kommen.

Die Nutzung von gewöhnlichen Logikeditoren und SPS-Programmierung erfordert spezialisierte technische Kenntnisse, die nicht jeder Anwender besitzt. Dies schränkt die Zugänglichkeit für weniger erfahrene Nutzer ein und erhöht den Schulungsaufwand. Ferner sind die Prozesse zur Erstellung und Anpassung der Steuerungslogik zeitintensiv, insbesondere wenn komplexe Verknüpfungen manuell erstellt werden müssen. Zusätzlich besteht eine hohe Fehleranfälligkeit, da Benutzer die Logiken in kleinen Schritten und ohne Unterstützung durch natürliche Sprachverarbeitung definieren müssen. Dies führt häufig zu Fehlkonfigurationen und einem erhöhten Bedarf an Tests und Korrekturen. Zudem erfordert die Arbeit mit einer SPS zusätzliche Hardware und Software, was zusätzliche Kosten verursacht. Schließlich sind die verfügbaren Oberflächen zur Erstellung der Logik oft nicht intuitiv und bedürfen detaillierter Kenntnisse der zugrunde liegenden Systemstruktur, was die Effizienz und Flexibilität der Automatisierungslösungen begrenzt.

Es ist Aufgabe der Erfindung, die Komplexität und den hohen Aufwands bei der Erstellung von logischen Verknüpfungen und Steuerungslogiken für IO-Link Master Gateways zu reduzieren. Herkömmliche Logikeditoren oder direkt in der speicherprogrammierbaren Steuerung (SPS) durchgeführte Programmierungen erfordern spezialisiertes Wissen und umfangreiche manuelle Konfigurationsarbeit, was die Zugänglichkeit einschränkt und Fehleranfälligkeit erhöht. Dies stellt insbesondere für Anwender ohne tiefgehende Programmierkenntnisse eine Herausforderung dar.

Die Lösung der Aufgabe erfolgt durch Verfahren mit den Merkmalen des Anspruchs 1, eine Vorrichtung mit den Merkmalen des Anspruchs 14 und ein computerlesbares Speichermedium mit den Merkmalen des Anspruchs 15.

Ein erfindungsgemäßes Verfahren zum Erstellen einer Steuerungslogik mindestens eines Bauteils, weist auf: Übermitteln von Bauteilbeschreibungsdaten an ein Large Language Model, wobei die Bauteilbeschreibungsdaten das mindestens eine Bauteil beschreiben; Übermitteln von Logikbeschreibungsinformationen an das Large Language Model, wobei die Logikbeschreibungsinformationen bezüglich der zu erstellenden Steuerungslogik aufweisen; und Instruieren des Large Language Models zum Erstellen der Steuerungslogik basierend auf den Bauteilbeschreibungsdaten und den Logikbeschreibungsinformationen.

Das Verfahren stellt insbesondere Schnittstellen bereit zum Übermitteln von Bauteilbeschreibungsdaten an ein Large Language Model, wobei die Bauteilbeschreibungsdaten das mindestens eine Bauteil beschreiben; zum Übermitteln von Logikbeschreibungsinformationen an das Large Language Model, wobei die Logikbeschreibungsinformationen bezüglich der zu erstellenden Steuerungslogik aufweisen; und zum Instruieren des Large Language Models zum Erstellen der Steuerungslogik basierend auf den Bauteilbeschreibungsdaten und den Logikbeschreibungsinformationen.

In anderen Worten wird ein LLM zur Ablösung (oder zum Ersetzen) eines Logikeditors in IO-Link Master Gateways bereitgestellt.

Ein Large Language Model (LLM) ist ein künstliches neuronales Netzwerk, das darauf trainiert wurde, Sprache zu verstehen und zu erzeugen. Es verwendet große Mengen an Textdaten, um Muster und Zusammenhänge in der Sprache zu erkennen und darauf basierend Antworten zu generieren. Diese Modelle arbeiten mit einer hohen Anzahl von Parametern, die die Fähigkeit zur Verarbeitung von Sprache auf hohem Niveau ermöglichen.

In einer Ausgestaltung werden die Bauteilbeschreibungsdaten in einem Prompt an das Large Language Model übermittelt werden. Diese Übermittelung kann bei jedem Instruieren zum Erstellen der graphischen Schnittstelle erfolgen. Es kann daher darauf verzichtet werden, das Large Language Model speziell mit den Bauteilbeschreibungsdaten zu trainieren. Es kann daher ein gewöhnliches Large Language Model zum Einsatz kommen.

In einer Ausführungsform werden Eingabedaten als Prompt-Komponenten an das LLM übergeben werden. Die Eingabedaten können einen Systemprompt, einen Userprompt, und Kontextdaten aufweisen.

Der Systemprompt, kann Informationen über folgendes aufweisen: Verfügbare Logikbausteine, und/ oder Unterstützte Schnittstellen und Datentypen, und/oder grundlegende Systemparameter.

Der Userprompt, kann Informationen über folgendes aufweisen: Natürlichsprachliche Beschreibung der gewünschten Logik, und/ oder Angabe von Geräten, Verbindungen und Bedingungen, und/ oder Spezifikation von Wertebereichen und Transformationen.

Die Kontextdaten können Informationen über folgendes aufweisen: IODD-Informationen der beteiligten Geräte, und/ oder Gateway-Konfiguration und verfügbare Ressourcen, und/ oder Anschluss- und Schnittstellenbelegung.

Die Bauteilbeschreibungsdaten können auf einer Gerätebeschreibung basieren. Beispielsweise kann die Gerätebeschreibung eine IO (input/ output) Device Descriptions (IODD) sein.

In einer Ausführungsform kann die Gerätebeschreibung in eine Mehrzahl von Snippets aufgeteilt werden. Ein Snippet kann dabei als ein (kurzer) Ausschnitt oder eine Zusammenfassung aus einem größeren Text verstanden werden. Dies ermöglicht es, die Gerätebeschreibung, die sehr groß sein kann, in kleinere Teile aufzuteilen. Eine weitere Reduktion der Größe der an das LLM zu übermittelnden Daten kann erreicht werden durch ein Berechnen von Embeddings der Mehrzahl von Snippets, und Verwenden der Embeddings als Bauteilbeschreibungsdaten.

Embeddings können mathematische Repräsentationen von Wörtern, Sätzen oder anderen Datenpunkten in einem kontinuierlichen Vektorraum sein. Durch Embeddings können die Textdaten der Gerätebeschreibung bzw. der Snippets in eine Form gebracht werden, die eine reduzierte Datenmenge hat und die für das LLM leichter zu verarbeiten ist. Die Embeddings können durch Trainingsprozesse erzeugt, bei denen ein Modell große Mengen an Textdaten verarbeitet. Während dieses Trainings lernt das Modell, semantische Beziehungen zwischen Wörtern zu erfassen und sie in Vektoren zu kodieren. Beispielsweise können die Embeddings durch folgende Verfahren erzeugt werden: Word2Vec, GloVe (Global Vectors for Word Representation), oder BERT und GPT.

In einer Ausführungsform werden Informationen über verfügbare Logikbausteine und/ oder unterstützte Schnittstellen und/ oder unterstützte Datentypen und/ oder grundlegende Systemparameter an das Large Language Model übermittelt.

Das Verfahren kann ferner ein Abfragen der Logikbeschreibungsinformationen von einem Benutzer enthalten. Dabei kann der Benutzer die gewünschte Logik in natürlicher Sprache eingeben, und muss sich nicht auf Details der technischen Gegebenheiten der Bauteile beziehen. Dadurch wird die Benutzung des Verfahrens auch für nicht oder weniger geschultes Personal möglich.

Das Verfahren kann ferner ein Erhalten von der Steuerungslogik von dem Large Language Model aufweisen. Dies kann vom LLM als Antwort auf das Instruieren erfolgen.

In einer Ausführungsform kann das Verfahren ferner aufweisen ein Instruieren des Large Language Models zum Anpassen der Steuerungslogik. Damit kann eine Iteration der Erstellung der Steuerungslogik mit dem Benutzer erfolgen. Der Benutzer kann dabei Änderungswünsche für die Steuerungslogik an das LLM übermitteln.

Das Verfahren stellt dabei eine Schnittstelle zum Instruieren des Large Language Models zum Anpassen der Steuerungslogik bereit.

Die Steuerungslogik kann eine strukturiere Logikbeschreibung und/ oder eine visualisierbare Repräsentation der Logik und/ oder einen ausführbaren Konfigurationscode aufweisen.

In einer Weiterbildung kann das Verfahren ferner ein Instruieren des Large Language Model zum Erstellen von Chain-of-Thought-prompting-Information aufweisen. Chain-of-Thought Prompting ist dabei eine Technik, um das Large Language Models dazu zu bringen, nachvollziehbare Denkweise zu zeigen. Anstatt nur eine direkte Antwort zu liefern, wird das **LLM** ermutigt, seine "Gedanken" in einer logischen Abfolge darzulegen, was zu genaueren und fundierteren Ergebnissen führen kann.

In einer Ausgestaltung kann das Large Language Model zumindest eines der folgenden Modelle aufweisen, sein oder darauf basieren: ChatGPT oder Deepseek.

Die Aufgabe der Erfindung wird ferner durch eine Vorrichtung zum Erstellen einer Steuerungslogik mindestens eines Bauteils gelöst, die folgendes aufweist: Mittel zum Übermitteln von Bauteilbeschreibungsdaten an ein Large Language Model, wobei die Bauteilbeschreibungsdaten das mindestens eine Bauteil beschreiben; Mittel zum Übermitteln von Logikbeschreibungsinformationen an das Large Language Model, wobei die Logikbeschreibungsinformationen bezüglich der zu erstellenden Steuerungslogik aufweisen; und Mittel zum Instruieren des Large Language Models zum Erstellen der Steuerungslogik basierend auf den Bauteilbeschreibungsdaten und den Logikbeschreibungsinformationen.

Die Aufgabe der Erfindung wird ferner durch ein computerlesbares Speichermedium gelöst, das Befehle umfasst, die bei der Ausführung durch einen Computer diesen veranlassen, das hierin beschriebene Verfahren auszuführen.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:
- Fig. 1: ein Systemdiagramm eines Systems zur Erzeugung einer Logik gemäß einer Ausführungsform; und
- Fig. 2: ein Flussdiagramm, das ein Verfahren zum Erstellen einer Steuerungslogik mindestens eines Bauteils gemäß einer Ausführungsform veranschaulicht.

Nachfolgend werden die erfindungsgemäßen Verfahren und Vorrichtungen exemplarisch anhand von Ausführungsbeispielen erläutert.

Die vorliegende Erfindung betrifft den Einsatz eines trainierten Large Language Models (LLM), um die Aufgaben eines Logikeditors im Kontext von IO-Link Master Gateways zu übernehmen. Traditionell wird zur Konfiguration von IO-Link Master Gateways ein Logikeditor verwendet oder die Logik-Verknüpfung direkt in der speicherprogrammierbaren Steuerung (SPS) durchgeführt, um komplexe logische Verknüpfungen und Konfigurationsregeln zu erstellen, die zur Steuerung von industriellen Automatisierungsprozessen erforderlich sind. Typische Logikbausteine, die in diesen Prozessen enthalten sind, umfassen Boolesche Operationen (UND, ODER, NICHT, XOR und weitere), Timer, Zähler, Vergleichsoperatoren, mathematische Operationen sowie Wenn-Dann-Bedingungen zur bedingten Ausführung von Aktionen. Ziel der Erfindung ist es, den Logikeditor durch ein LLM zu ersetzen, sodass der Nutzer durch natürliche Spracheingabe (Prompting) komplexe Logikoperationen formulieren und ausführen lassen kann. Hierfür kann ein LLM trainiert speziell trainiert werden.

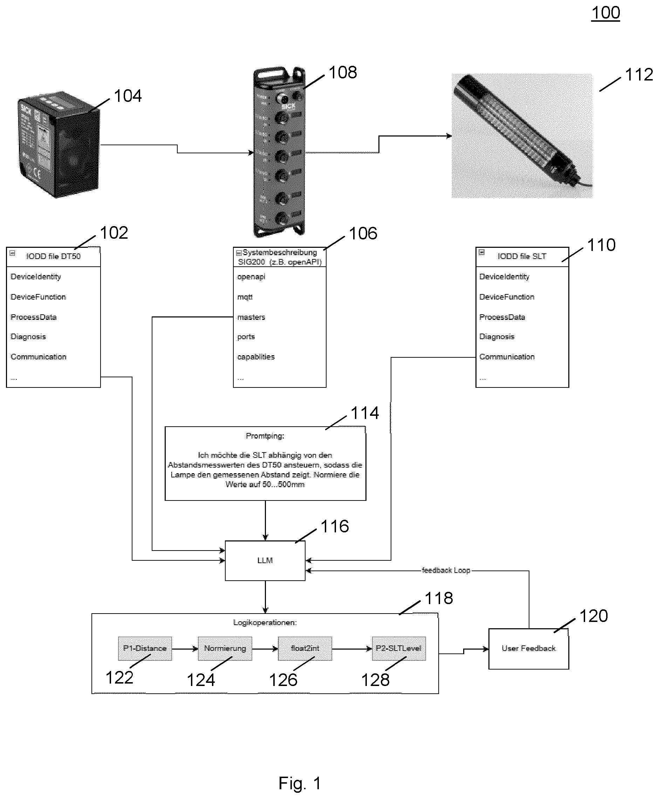

Fig. 1 zeigt ein Systemdiagramm 100 eines Systems zur Erzeugung einer Logik gemäß einer Ausführungsform. Eine IODD 102 eines ersten Bauteils 104, eine Systembeschreibung 106 eines zweiten Bauteils 108, und eine IODD 110 eines dritten Bauteils 112 werden zusammen mit einem Prompt 114 an ein LLM 116 übermittelt. Das LLM 116 erzeugt daraus eine Abfolge von Logikoperationen 118 (beispielsweise Logikoperationen 122, 124, 126, 128) und stellt diese dem Benutzer zur Verfügung. Die IODD 102, die Systembeschreibung 106 und die IODD 110 sind Beispiele für Bauteilbeschreibungen. Der Benutzer kann seine Rückmeldung (User Feedback 120) geben, wodurch eine Rückmeldungsschleife (Feedback Loop) mit dem LLM 116 erzeugt wird, so dass das LLM 116 die Logikoperationen iterativ basierend auf dem User Feedback 120 anpassen kann.

Der Trainingsprozess des LLM basiert auf den Inhalten der IO Device Descriptions (IODDs), welche beschreiben, was die Bauteile (beispielsweise die Sensoren und Aktoren) können, sowie der Systembeschreibung, auf der das LLM läuft, um zu wissen, welche Anschlüsse existieren und welche Interfaces zur Verfügung stehen (z.B. IoT, Feldbus, IO-Link, Ethernet, digitale Ein- und Ausgänge, etc.). Weiterhin werden die existierenden Logikbausteine sowie das gewünschte Ausgangsverhalten berücksichtigt. Das Modell kann mit einer Vielzahl von Beispielaufgaben trainiert werden, welche die verschiedenen logischen Konfigurationen, Entscheidungsprozesse und Steuerungsabläufe widerspiegeln. Diese Daten können nicht nur die Strukturen der Logiken selbst umfassen, sondern auch den spezifischen Kontext, in dem diese Logiken verwendet werden, etwa Sensordatenverarbeitung, Gerätekommunikation und Automatisierungsszenarien.

Das Training des LLM kann in mehreren Stufen erfolgen: in einer Grundausbildung, gefolgt von einem domänenspezifischen Feintuning, und Validierung und Verifikation.

Die Grundausbildung kann ein Basistraining mit allgemeinen Sprachmodellen enthalten, um die natürliche Sprachverarbeitung zu gewährleisten.

Domänenspezifisches Feintuning kann eine zusätzliche Schulung anhand spezieller IO-Link Use Cases und Logikeditor-Dokumentationen enthalten.

Bei der Validierung und Verifikation kann in eine Validierung der Ergebnisse durch Simulationen und ein Vergleich mit typischen Aufgaben des herkömmlichen Logikeditors erfolgen, um die Korrektheit und die Zuverlässigkeit des Modells zu gewährleisten.

In einer Ausführungsform kann ein großes Sprachmodell verwendet werden, wobei nur das Fine-Tuning noch selbst durchgeführt wird. Alternativ können eigene LLMs trainiert werden, ausgehend von der Grundausbildung.

Die korrekte Umsetzung durch die LLM kann durch verschiedene Methoden verifiziert werden. Beispielsweise kann dies durch eine visuelle Darstellung mit User-Feedback erfolgen, wobei der User kann anhand der erstellten Logik nachvollziehen kann, ob die Umsetzung seiner Vorstellung entspricht und über einen Button bestätigen oder per Drag&Drop korrigieren. Dies stellt eine Feedback-Loop der LLM zur kontinuierlichen Verbesserung bereit. Alternativ oder zusätzlich kann die Implementierung einer Simulation zu Testzwecken erfolgen, wobei die implementierte Logik kann anhand von Beispieldaten getestet und verifiziert wird indem die Logikschritte in einer einfachen Simulation nachvollzogen werden.

Die Verfahren und Vorrichtungen gemäß verschiedener Ausführungsformen ermöglichen eine schnelle Implementierung von Applikationen und Testlogiken, eine schnelle Reaktionszeit auf Änderungswünsche, und eine Reduktion des Aufwands zur Erstellung und Anpassung von Steuerungslogiken. Ferner wird die Nutzerfreundlichkeit durch natürliche Spracheingaben erhöht, wodurch auch Anwender ohne tiefgehende technische Kenntnisse komplexe Logiken erstellen können. Es kann die Fehleranfälligkeit durch automatisierte Logikerstellung verringert werden. Dabei ist keine zusätzliche Hardware und Software erforderlich, wie bei SPS-basierten Lösungen. Es wird eine schnelle Anpassung und hohe Flexibilität in der Automatisierung durch die Nutzung eines trainierten LLM ermöglicht.

Die verschiedenen Ausführungsformen können für alle Arten von Sensoren und Aktuatoren zum Einsatz kommen, beispielsweise für SIMs (Sensor Integration Machines) und/ oder SIGs (Sensor Integration Gateways), die einen Logikeditor vorgesehen haben.

Eine IODD kann durch die Spezifikation des IOLink Konsortiums definiert sein, wie sie unter https://io-link.com/share/Downloads/Package-2024-released/IO-Device-Desc-Spec_10012_V114_Jun24.zip zu finden ist.

Beispielsweise enthält eine IODD folgende Elemente:
- DocumentInfo: Enthält Versionsinformationen, Veröffentlichungsdatum und Copyright-Hinweise;
- ProfileHeader: Gibt konstante Informationen wie Profilidentifikation, Profilrevision und Profilklassen-ID an;
- ProfileBody: Beschreibt die Identität und Funktionalität des Geräts;
- CommNetworkProfile: Beschreibt die Kommunikationscharakteristiken des Geräts;
- ExternalTextCollection: Beinhaltet sprachabhängige Beschreibungstexte;
- Stamp: Enthält eine Prüfsumme für Validierungszwecke, um sicherzustellen, dass die Datei nicht verändert wurde;
- Deviceldentity: Enthält Informationen zur Identität des Geräts, wie Hersteller-ID und Geräte-ID;
- DeviceVariantCollection: Listet verschiedene Varianten des Geräts auf, die sich beispielsweise in der Bauform oder Anschlussart unterscheiden;
- Features: Definiert spezifische Funktionen des Geräts, z. B. ob es Blockparameter-Übertragung unterstützt;
- DataTypeCollection: Beinhaltet Datentypen, die in der IODD verwendet werden, z. B. für Parameter oder Prozessdaten;
- Variables: Definiert Variablen und deren Datentypen, die im Gerät verwendet werden;
- ProcessDataCollection: Beschreibt die Prozessdaten, die das Gerät sendet oder empfängt;
- ErrorTypeCollection: Listet die vom Gerät unterstützten Fehlertypen auf;
- EventCollection: Definiert verschiedene Ereignisse, die das Gerät auslösen kann;
- User Interface: Beinhaltet Menüs, Schaltflächen und Verweise auf Variablen für die Benutzeroberfläche;
- Communication Characteristics: Definiert Netzwerkprofile und Verbindungstypen, z. B. die Art der Steckverbinder;
- Sprachdateien (optional): Unterstützt zusätzliche Sprachen für die IODD-Datei, damit das Gerät in mehreren Sprachen beschrieben werden kann;
- Bilddateien (optional): Enthält Logos des Herstellers und Gerätesymbole für die grafische Darstellung;
- Schema-Dateien: Stellen sicher, dass die XML-Struktur der IODD-Datei korrekt ist und nach den vorgegebenen Regeln validiert werden kann.

Das erfindungsgemäße LLM-basierte System zur Ersetzung des traditionellen Logikeditors implementiert einen strukturierten Datenfluss von natürlichsprachlichen Anforderungen zu präzisen, ausführbaren Logikkonfigurationen.

Die Eingabedaten an das LLM (die als Prompt-Komponenten an das LLM übergeben werden), können den Systemprompt, den Userprompt, und die Kontextdaten beinhalten.

Der Systemprompt (welcher ein konstanter Basiskontext sein kann), kann Informationen über folgendes enthalten: Verfügbare Logikbausteine, und/ oder Unterstützte Schnittstellen und Datentypen, und/oder grundlegende Systemparameter.

Der Userprompt (welcher variabel sein kann), kann Informationen über folgendes enthalten: Natürlichsprachliche Beschreibung der gewünschten Logik, und/ oder Angabe von Geräten, Verbindungen und Bedingungen, und/ oder Spezifikation von Wertebereichen und Transformationen.

Die Kontextdaten (welche dynamisch sein können) können Informationen über folgendes enthalten: IODD-Informationen der beteiligten Geräte, und/ oder Gateway-Konfiguration und verfügbare Ressourcen, und/ oder Anschluss- und Schnittstellenbelegung.

Die Ausgabedaten des LLM können eine strukturierte Logikbeschreibung (beispielsweise im JSON/XML-Format) und/ oder eine visualisierbare Repräsentation für Feedback/Verifikation und/ oder einen ausführbaren Konfigurationscode für IO-Link Master enthalten.

Die Input-Verarbeitungspipeline, also die Transformation von natürlichsprachlichen Beschreibungen in präzise Logikspezifikationen kann gemäß verschiedener Ausführungsformen in vier Hauptphasen erfolgen, wie sie in den Tabellen 1, 2, 3 und 4 dargestellt sind.

**Tabelle 1: Parsing und Voranalyse.**

| **Prozessschritt** | **Beschreibung** |
|---|---|
| Natürlichsprachliche Zerlegung | Extraktion von Geräten, Aktionen und Bedingungen aus dem Text |
| Erkennung von Schlüsselkonzepten | Identifikation von Messgrößen, Schwellenwerten und Anforderungen |
| Kontext-Mapping | Verbindung von Beschreibungen mit bekannten IO-Link-Gerätetypen |
| Anforderungsklassifikation | Einordnung in Logiktypen (bedingt, kontinuierlich, etc.) |

**Tabelle 2: Semantische Analyse.**

| **Prozessschritt** | **Beschreibung** |
|---|---|
| Gerätekompetenzprüfung | Abgleich der Anforderungen mit IODD-Fähigkeiten |
| Plausibilitätsprüfung | Validierung der Wertebereiche und physikalischen Einheiten |
| Abhängigkeitsanalyse | Erstellung eines Abhängigkeitsgraphen zwischen Datenpunkten |
| Timing-Analyse | Identifikation zeitkritischer Operationen |

**Tabelle 3: Logikgenerierung.**

| **Prozessschritt** | **Beschreibung** |
|---|---|
| Segmentierung | Zerlegung komplexer Anforderungen in atomare Logikbausteine |
| Optimierung | Zusammenfassung redundanter Operationen, Vereinfachung |
| Ressourcenallokation | Zuweisung von Speicher- und Berechnungsressourcen |
| Fehlerbehandlung | Integration von Ausnahmebehandlungen und Fehlerchecks |

**Tabelle 4: Formalisierung.**

| **Prozessschritt** | **Beschreibung** |
|---|---|
| Strukturiertes Modell | Umwandlung in formale Logikbeschreibung (Graph) |
| Serialisierung | Erstellung einer strukturierten JSON/XML-Repräsentation |
| Kompatibilitätsprüfung | Validierung gegen Gateway-spezifische Einschränkungen |
| Versionierung | Kontrolle von API-Kompatibilität |

Anhang 1 zeigt ein Beispiel für einen Systemprompt.

Im Systemprompt kann der Kontext, in der das LLM verwendet wird, gesetzt werden ("Du bist ein Logik-Assistent für IO-Link Master Gateways. Deine Aufgabe ist es, natürlichsprachliche Beschreibungen in präzise Logikelemente zu übersetzen."). Ferner können die verfügbaren Logikbausteine ("Verfügbare Logikbausteine: ...") und die verfügbaren Datentypen ("Verfügbare Datentypen: ...") definiert werden. Zudem kann die Aufgabe für das LLM definiert werden ("Generiere für jede Anfrage: ...").

Anhang 2 zeigt ein Beispiel für einen Userprompt. Der Userprompt kann vom Benutzer in natürlicher Sprache eingegeben werden und definieren, was der Benutzer bekommen möchte. Dabei kann der Benutzer die gewünschte Logik beschreiben durch Angabe der zu verwendenden Bauteile ("Ich möchte einen Distanzsensor (DT50) an Port 1 und eine Signalleuchte (SLT) an Port 2 verbinden.") und kann die gewünschte Logik oder auch gewünschte Anzeigebereiche definieren ("Die Signalleuchte soll den vom Sensor gemessenen Abstand anzeigen. Der Messbereich des Sensors ist 0-5000mm, aber die Leuchte soll nur Werte zwischen 50-500mm visualisieren. Wenn der Abstand unter 50mm fällt, soll die Leuchte rot blinken.").

Anhang 3 zeigt ein Beispiel für einen logischen Verarbeitungsalgorithmus. Anhang 4 zeigt ein Beispiel für eine generierte Logik (bzw. Logikstruktur), welches für das Beispiel mit Distanzsensor und Signalleuchte erzeugt wurde.

Zur Erzeugung der Logik mittels des LLM können folgende zusätzliche Daten verwendet werden: IODD-Metadaten, Gateway-Spezifikationen, und/ oder eine Logikelemente-Bibliothek.

Die IODD-Metadaten können Informationen über Geräteidentitäten und Funktionsbeschreibungen, Prozessdatenstrukturen und Datentypen, Unterstützte Parameter und Konfigurationsoptionen, und/ oder Ereignisse und Fehlermeldungen enthalten.

Die Gateway-Spezifikationen können Informationen über verfügbare Hardware-Ressourcen (CPU, Speicher), unterstützte Kommunikationsprotokolle, Timing-Constraints und Echtzeitfähigkeiten, und/ oder Sicherheitsfeatures und Zugriffsbeschränkungen enthalten.

Die Logikelemente-Bibliothek kann die vollständige Beschreibungen aller verfügbaren Logikbausteine, funktionale Spezifikationen mit Ein-/Ausgabeparametern Performance-Charakteristiken, und/ oder eine Kompatibilitätsmatrix für Verkettungen enthalten.

Die Vorverarbeitung kann eine Extraktion relevanter IODD-Daten, eine Systemkontextgenerierung und/ oder eine Prompt-Erweiterung enthalten.

Die Extraktion relevanter IODD-Daten kann eine automatische Auswertung der IODD-Dateien, eine Identifikation relevanter Parameter und Prozessdaten, und/ oder eine Strukturierung der Geräteeigenschaften enthalten.

Die Systemkontextgenerierung kann eine Analyse verfügbarer Schnittstellen und Anschlüsse, eine Erstellung eines Systemkontexts mit Verbindungsmöglichkeiten, und/ oder eine Integration der Master-Gateway-Funktionen enthalten.

Die Prompt-Erweiterung kann eine Ergänzung des Userpromptes mit strukturierten IODD-Informationen, ein Hinzufügen verfügbarer Variablen und Datentypen, und/ oder eine Bereitstellung relevanter Constraints enthalten.

Die Nachverarbeitung kann eine Logikvalidierung, eine Visualisierungsgenerierung, und/ oder eine Konfigurationscode-Generierung enthalten.

Die Logikvalidierung kann eine Überprüfung auf syntaktische Korrektheit, eine Prüfung gegen Datentyp-Kompatibilität, und/ oder eine Erkennung potenzieller Wertebereichsüberschreitungen enthalten.

Die Visualisierungsgenerierung kann eine Umwandlung der JSON/XML-Logikbeschreibung in Flussdiagramm, eine Farbkodierung verschiedener Logikbausteine, und/ oder eine interaktive Darstellung mit Ein-/Ausgabewerten enthalten.

Die Konfigurationscode-Generierung kann eine Umwandlung der Logikbeschreibung in ausführbaren Code, eine Berücksichtigung gerätespezifischer Einschränkungen, und/ oder ein Optimierung für Ressourceneffizienz enthalten.

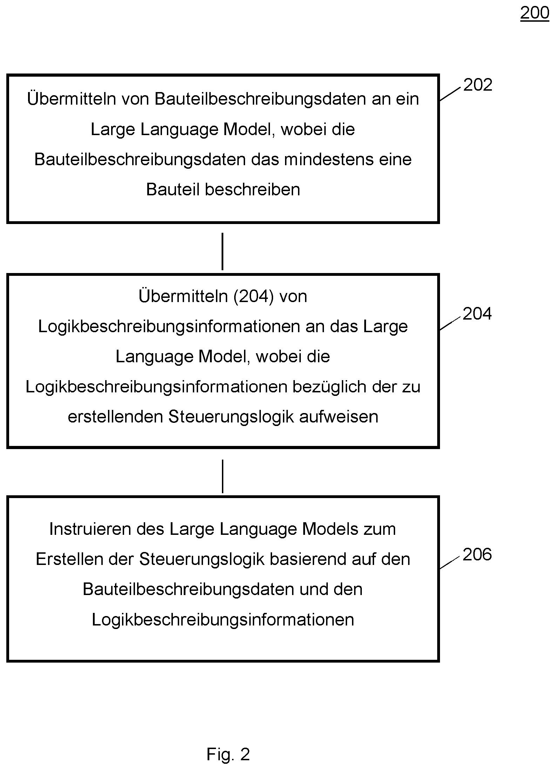

Fig. 2 zeigt ein Flussdiagramm 200 , das ein Verfahren zum Erstellen einer Steuerungslogik mindestens eines Bauteils gemäß einer Ausführungsform veranschaulicht. In 202 werden Bauteilbeschreibungsdaten an ein Large Language Model übermittelt. Die Bauteilbeschreibungsdaten beschreiben das mindestens eine Bauteil. In 204 werden Logikbeschreibungsinformationen an das Large Language Model übermittelt, wobei die Logikbeschreibungsinformationen bezüglich der zu erstellenden Steuerungslogik aufweisen. In 206 wird das Large Language Models zum Erstellen der Steuerungslogik basierend auf den Bauteilbeschreibungsdaten und den Logikbeschreibungsinformationen instruiert.

In einer Ausführungsform werden die Bauteilbeschreibungsdaten in einem Prompt an das Large Language Model übermittelt.

In einer Ausführungsform basieren die Bauteilbeschreibungsdaten auf einer Gerätebeschreibung.

In einer Ausführungsform enthalten die Eingabedaten an das LLM (die als Prompt-Komponenten an das LLM übergeben werden) einen Systemprompt, einen Userprompt, und Kontextdaten.

In einer Ausführungsform enthält der Systemprompt), Informationen über folgendes: Verfügbare Logikbausteine, und/ oder Unterstützte Schnittstellen und Datentypen, und/oder grundlegende Systemparameter.

In einer Ausführungsform enthält der Userprompt, Informationen über folgendes: Natürlichsprachliche Beschreibung der gewünschten Logik, und/ oder Angabe von Geräten, Verbindungen und Bedingungen, und/ oder Spezifikation von Wertebereichen und Transformationen.

In einer Ausführungsform enthalten die Kontextdaten Informationen über folgendes enthalten: IODD-Informationen der beteiligten Geräte, und/ oder Gateway-Konfiguration und verfügbare Ressourcen, und/ oder Anschluss- und Schnittstellenbelegung.

In einer Ausführungsform wird die Gerätebeschreibung in eine Mehrzahl von Snippets aufgeteilt.

In einer Ausführungsform werden Embeddings der Mehrzahl von Snippets berechnet und die Embeddings als Bauteilbeschreibungsdaten verwendet.

In einer Ausführungsform werden Informationen über verfügbare Logikbausteine und/ oder unterstützte Schnittstellen und/ oder unterstützte Datentypen und/ oder grundlegende Systemparameter an das Large Language Model übermittelt.

In einer Ausführungsform werden die Logikbeschreibungsinformationen von einem Benutzer abgefragt.

In einer Ausführungsform beschreiben die Logikbeschreibungsinformationen die zu erstellende Steuerungslogik in natürlicher Sprache.

In einer Ausführungsform wird die Steuerungslogik von dem Large Language Model erhalten.

In einer Ausführungsform wird das Large Language Models zum Anpassen der Steuerungslogik instruiert.

In einer Ausführungsform enthält oder ist die Steuerungslogik eine strukturiere Logikbeschreibung und/ oder eine visualisierbare Repräsentation der Logik und/ oder einen ausführbaren Konfigurationscode.

In einer Ausführungsform wird das Large Language Model zum Erstellen von Chain-of-Thought-prompting-Information instruiert.

In einer Ausführungsform enthält oder ist oder basiert das Large Language Model zumindest auf einem der folgenden Modelle: ChatGPT oder Deepseek.

### Bezugszeichenliste

- 100: Systemdiagramm eines Systems zur Erzeugung einer Logik gemäß einer Ausführungsform
- 102: IODD
- 104: erstes Bauteils
- 106: Systembeschreibung
- 108: zweites Bauteil
- 110: IODD
- 112: drittes Bauteil
- 114: Prompt
- 116: LLM
- 118: Logikoperationen
- 120: User Feedback
- 122: Logikoperation
- 124: Logikoperation
- 126: Logikoperation
- 128: Logikoperation

- 200: Flussdiagramm, das ein Verfahren zum Erstellen einer Steuerungslogik mindestens eines Bauteils gemäß einer Ausführungsform veranschaulicht.
- 202: Schritt zum Übermitteln von Bauteilbeschreibungsdaten an ein Large Language Model
- 204: Schritt zum Übermitteln von Logikbeschreibungsinformationen an das Large Language Model
- 206: Schritt zum Instruieren des Large Language Models zum Erstellen der Steuerungslogik basierend auf den Bauteilbeschreibungsdaten und den Logikbeschreibungsinformationen

### Anhang 1: Beispiel für einen Systemprompt

Du bist ein Logik-Assistent für IO-Link Master Gateways. Deine Aufgabe ist es, natürlichsprachliche Beschreibungen in präzise Logikelemente zu übersetzen.

Verfügbare Logikbausteine:
- Boolesche Operationen: UND, ODER, NICHT, XOR
- Mathematische Operationen: Addition, Subtraktion, Multiplikation, Division, Normierung - Vergleichsoperatoren: >, <, =, >=, <=, !=
- Zeitliche Operationen: Timer, Verzögerung, Zähler
- Konvertierungen: Float2Int, Int2Float, Bit-Operationen Verfügbare Schnittstellen im System:
- IO-Link Ports: P1, P2, P3, P4, P5, P6, P7, P8
- Digitale Ein-/Ausgänge: DI1, DI2, DO1, DO2
- Kommunikationsschnittstellen: MQTT, OPC UA, EtherNet/IP, PROFINET

Verfügbare Datentypen:
- Ganzzahlen (8-Bit, 16-Bit, 32-Bit)
- Fließkommazahlen (32-Bit)
- Boolesche Werte
- Arrays und Strukturen gemäß IODD-Spezifikation Generiere für jede Anfrage:
   1. Eine strukturierte Logikelementbeschreibung im JSON-Format
   2. Eine textuelle Erläuterung der implementierten Logik
   3. Eine Visualisierung der Logikschritte

### Anhang 2: Beispiel für einen Userprompt

Ich möchte einen Distanzsensor (DT50) an Port 1 und eine Signalleuchte (SLT) an Port 2 verbinden. Die Signalleuchte soll den vom Sensor gemessenen Abstand anzeigen. Der Messbereich des Sensors ist 0-5000mm, aber die Leuchte soll nur Werte zwischen 50-500mm visualisieren. Wenn der Abstand unter 50mm fällt, soll die Leuchte rot blinken.

### Anhang 3: Beispiel für einen logischen Verarbeitungsalgorithmus

Eingabe: Natürlichsprachlicher Prompt + Kontextdaten (IODDs, Gateway-Konfiguration) Ausgabe: Formalisierte Logikbeschreibung

Algorithmus InputProcessing:
1. TextSegmentierung(prompt) segmente
2. EntityExtraktion(segmente, iodds) entitäten
   - Geräte-Entitäten
   - Messgrößen-Entitäten
   - Aktions-Entitäten
   - Bedingungsentitäten
3. RelationsExtraktion(entitäten) beziehungen
   - Ursache-Wirkungs-Beziehungen
   - Transformationsbeziehungen
   - Bedingungsbeziehungen
4. AnforderungsMapping(beziehungen, iodds) logische_anforderungen
   - Matching von natürlicher Sprache zu IO-Link-Konzepten
   - Erkennung impliziter Anforderungen
   - Auflösung von Mehrdeutigkeiten
5. LogikgraphErstellung(logische_anforderungen) initialer_graph
   - Knoten für Datenquellen, Transformationen, Bedingungen, Aktionen
   - Kanten für Datenfluss
6. LogikoptimierungAnwenden(initialer_graph) optimierter_graph
   - Eliminierung redundanter Berechnungen
   - Parallelisierung unabhängiger Operationen
   - Kombination aufeinanderfolgender Transformationen
7. VerfügbarkeitsprüfungDurchführen(optimierter_graph, gateway_capabilities) validierter_graph
   - Prüfung auf unterstützte Operationen
   - Ressourcennutzungsschätzung
   - Identifikation von Limitierungen
8. LogikSerialisierung(validierter_graph, zielformat) formalisierte_logik
   - Umwandlung in maschinenlesbare Repräsentation
   - Hinzufügen von Metadaten (Versionen, Abhängigkeiten)
   - Dokumentationsgenerierung

### Anhang 4: Beispiel für eine generierte Logik

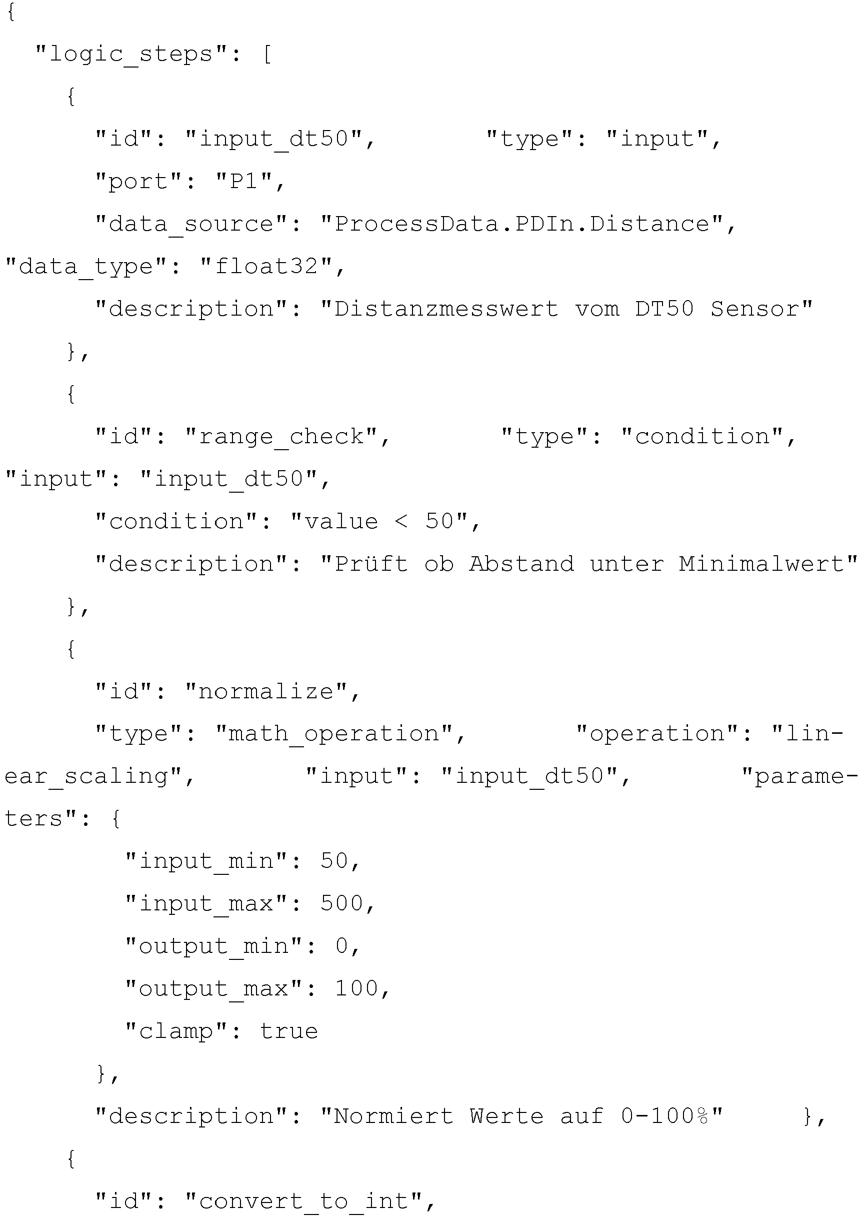

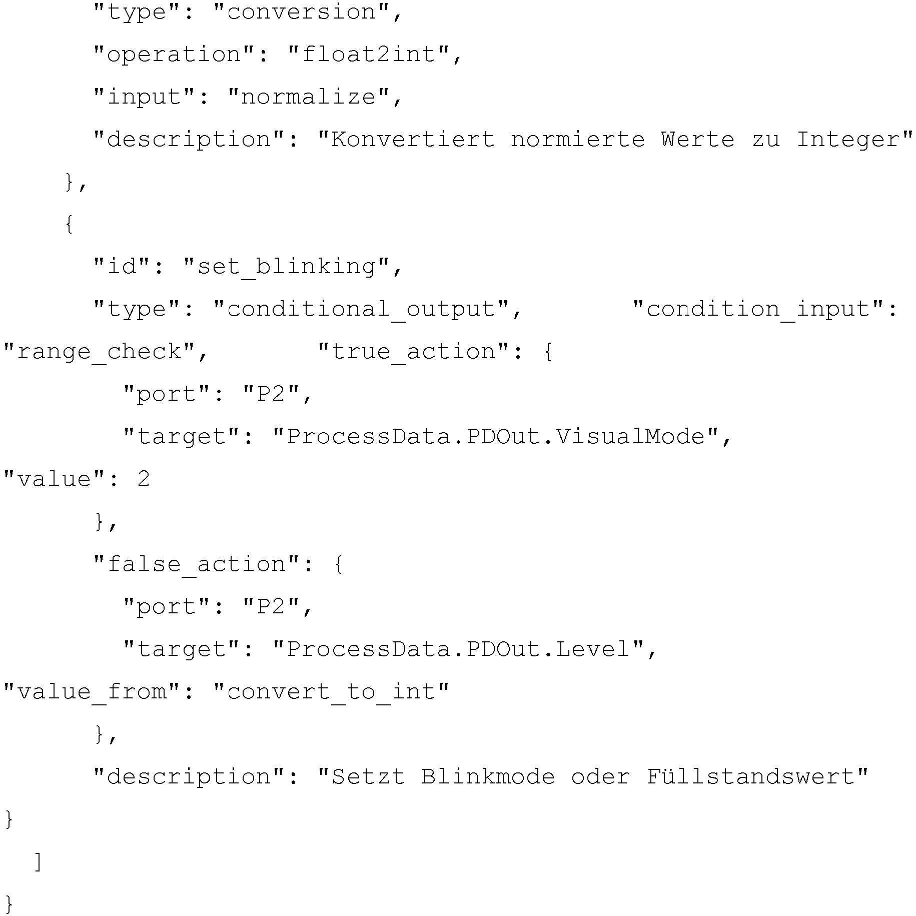

## Patentansprüche

1. Verfahren zum Erstellen einer Steuerungslogik mindestens eines Bauteils, das Verfahren aufweisend:
- Übermitteln (202) von Bauteilbeschreibungsdaten an ein Large Language Model, wobei die Bauteilbeschreibungsdaten das mindestens eine Bauteil beschreiben;
- Übermitteln (204) von Logikbeschreibungsinformationen an das Large Language Model, wobei die Logikbeschreibungsinformationen bezüglich der zu erstellenden Steuerungslogik aufweisen; und
- Instruieren (206) des Large Language Models zum Erstellen der Steuerungslogik basierend auf den Bauteilbeschreibungsdaten und den Logikbeschreibungsinformationen.

2. Verfahren nach Anspruch 1,
wobei die Bauteilbeschreibungsdaten in einem Prompt an das Large Language Model übermittelt werden.

3. Verfahren nach Anspruch 1 oder 2,
wobei die Bauteilbeschreibungsdaten auf einer Gerätebeschreibung basieren.

4. Verfahren nach Anspruch 3, ferner aufweisend:
Aufteilen der Gerätebeschreibung in eine Mehrzahl von Snippets.

5. Verfahren nach Anspruch 4, ferner aufweisend:
Berechnen von Embeddings der Mehrzahl von Snippets; und
Verwenden der Embeddings als Bauteilbeschreibungsdaten.

6. Verfahren nach einem der vorstehenden Ansprüche, ferner aufweisend: Übermitteln von Informationen über verfügbare Logikbausteine und/ oder unterstützte Schnittstellen und/ oder unterstützte Datentypen und/ oder grundlegende Systemparameter an das Large Language Model.

7. Verfahren nach einem der vorstehenden Ansprüche, ferner aufweisend: Abfragen der Logikbeschreibungsinformationen von einem Benutzer.

8. Verfahren nach Anspruch 7,
wobei die Logikbeschreibungsinformationen die zu erstellende Steuerungslogik in natürlicher Sprache beschreibt.

9. Verfahren nach einem der vorstehenden Ansprüche, ferner aufweisend: Erhalten der Steuerungslogik von dem Large Language Model.

10. Verfahren nach Anspruch 9, ferner Aufweisend
Instruieren des Large Language Models zum Anpassen der Steuerungslogik.

11. Verfahren nach einem der vorstehenden Ansprüche,
wobei die Steuerungslogik eine strukturiere Logikbeschreibung und/ oder eine visualisierbare Repräsentation der Logik und/ oder einen ausführbaren Konfigurationscode aufweist.

12. Verfahren nach einem der vorstehenden Ansprüche, ferner aufweisend: Instruieren des Large Language Model zum Erstellen von Chain-of-Thought-prompting-Information.

13. Verfahren nach einem der vorstehenden Ansprüche,
wobei das Large Language Model zumindest eines der folgenden Modelle aufweist oder ist oder darauf basiert: ChatGPT oder Deepseek.

14. Vorrichtung zum Erstellen einer Steuerungslogik mindestens eines Bauteils, das Verfahren aufweisend:
- Mittel zum Übermitteln von Bauteilbeschreibungsdaten an ein Large Language Model, wobei die Bauteilbeschreibungsdaten das mindestens eine Bauteil beschreiben;
- Mittel zum Übermitteln von Logikbeschreibungsinformationen an das Large Language Model, wobei die Logikbeschreibungsinformationen bezüglich der zu erstellenden Steuerungslogik aufweisen; und
- Mittel zum Instruieren des Large Language Models zum Erstellen der Steuerungslogik basierend auf den Bauteilbeschreibungsdaten und den Logikbeschreibungsinformationen.

15. Computerlesbares Speichermedium, umfassend Befehle, die bei der Ausführung durch einen Computer diesen veranlassen, das Verfahren nach Ansprüche 1 bis 13 auszuführen.

## Geänderte Patentansprüche

### Geänderte Patentansprüche gemäss Regel 137(2) EPÜ.

1. Verfahren zum Erstellen einer Steuerungslogik mindestens eines Bauteils, das Verfahren aufweisend:
- Übermitteln (202) von Bauteilbeschreibungsdaten an ein Large Language Model, wobei die Bauteilbeschreibungsdaten das mindestens eine Bauteil beschreiben;
- Übermitteln (204) von Logikbeschreibungsinformationen an das Large Language Model, wobei die Logikbeschreibungsinformationen Informationen bezüglich der zu erstellenden Steuerungslogik aufweisen; und
- Instruieren (206) des Large Language Models zum Erstellen der Steuerungslogik basierend auf den Bauteilbeschreibungsdaten und den Logikbeschreibungsinformationen;
wobei die Bauteilbeschreibungsdaten auf einer Gerätebeschreibung, insbesondere einer Input/ Output Device Descriptions, IODD, basieren.

2. Verfahren nach Anspruch 1,
wobei die Bauteilbeschreibungsdaten in einem Prompt an das Large Language Model übermittelt werden.

3. Verfahren nach Anspruch 1 oder 2, ferner aufweisend:
Aufteilen der Gerätebeschreibung in eine Mehrzahl von Snippets.

4. Verfahren nach Anspruch 3, ferner aufweisend:
Berechnen von Embeddings der Mehrzahl von Snippets; und
Verwenden der Embeddings als Bauteilbeschreibungsdaten.

5. Verfahren nach einem der vorstehenden Ansprüche, ferner aufweisend:
Übermitteln von Informationen über verfügbare Logikbausteine und/ oder
unterstützte Schnittstellen und/ oder unterstützte Datentypen und/ oder
grundlegende Systemparameter an das Large Language Model.

6. Verfahren nach einem der vorstehenden Ansprüche, ferner aufweisend:
Abfragen der Logikbeschreibungsinformationen von einem Benutzer.

7. Verfahren nach Anspruch 6,
wobei die Logikbeschreibungsinformationen die zu erstellende Steuerungslogik in natürlicher Sprache beschreibt.

8. Verfahren nach einem der vorstehenden Ansprüche, ferner aufweisend:
Erhalten der Steuerungslogik von dem Large Language Model.

9. Verfahren nach Anspruch 8, ferner Aufweisend
Instruieren des Large Language Models zum Anpassen der Steuerungslogik.

10. Verfahren nach einem der vorstehenden Ansprüche,
wobei die Steuerungslogik eine strukturiere Logikbeschreibung und/ oder
eine visualisierbare Repräsentation der Logik und/ oder einen ausführbaren Konfigurationscode aufweist.

11. Verfahren nach einem der vorstehenden Ansprüche, ferner aufweisend: Instruieren des Large Language Model zum Erstellen von Chain-of-Thought-prompting-Information.

12. Verfahren nach einem der vorstehenden Ansprüche,
wobei das Large Language Model zumindest eines der folgenden Modelle aufweist oder ist oder darauf basiert: ChatGPT oder Deepseek.

13. Vorrichtung zum Erstellen einer Steuerungslogik mindestens eines Bauteils, das Verfahren aufweisend:
- Mittel zum Übermitteln von Bauteilbeschreibungsdaten an ein Large Language Model, wobei die Bauteilbeschreibungsdaten das mindestens eine Bauteil beschreiben;
- Mittel zum Übermitteln von Logikbeschreibungsinformationen an das Large Language Model, wobei die Logikbeschreibungsinformationen Informationen bezüglich der zu erstellenden Steuerungslogik aufweisen; und
- Mittel zum Instruieren des Large Language Models zum Erstellen der Steuerungslogik basierend auf den Bauteilbeschreibungsdaten und den Logikbeschreibungsinformationen;
wobei die Bauteilbeschreibungsdaten auf einer Gerätebeschreibung, insbesondere einer Input/ Output Device Descriptions, IODD, basieren.

14. Computerlesbares Speichermedium, umfassend Befehle, die bei der Ausführung durch einen Computer diesen veranlassen, das Verfahren nach Ansprüche 1 bis 12 auszuführen.
